# EUROPEAN PATENT SPECIFICATION

(11) **EP 2 163 427 B1**
(45) Date of publication and mention of the grant of the patent: **16.03.2011**
(21) Application number: 09168618.8
(22) Date of filing: 25.08.2009
(51) Int. Cl.: B60Q 1/076

(54) **Vehicle headlamp**
Fahrzeugscheinwerfer
Phare de véhicule

(30) Priority: 12.09.2008 JP 2008234724
(43) Date of publication of application: 17.03.2010
(73) Proprietor: Koito Manufacturing Co., Ltd., Tokyo 108-8711 (JP)
(72) Inventor: Shibata, Hiroki c/o Koito Manufacturing Co., Ltd.,, Shizuoka-shi Shizuoka (JP)
(74) Representative: Finnie, Peter John

(56) References cited:
- DE-A1- 10 247 381
- US-A- 4 674 013
- US-A1- 2008 089 086
- US-A1- 2008 112 181
- US-A1- 2008 130 301

## Description

### BACKGROUND OF THE INVENTION

### Field of the Invention

The present invention relates to a vehicle headlamp. Specifically, the present invention relates to improving a vibration suppression property of a vehicle headlamp by coupling a lighting unit to other members using first and second coupling portions.

### Description of Related Art

There is known a vehicle headlamp in which a lighting unit having a light source is disposed inside a lighting case which includes a cover and lamp housing.

A lighting unit of a vehicle headlamp is adapted to be capable of adjusting an initial position (aiming adjustment) of an irradiation direction by an optical axis adjustment mechanism (aiming adjustment mechanism) (see, e.g., Japanese Patent Unexamined Publication JP-A-2004-227933). In such a vehicle headlamp, it is possible to perform a left and right aiming adjustment for rotating the lighting unit in a left and right direction (horizontal direction) relative to the lighting case, and a vertical aiming adjustment for tilting the lighting unit in a substantially vertical direction relative to the lighting case.

In the vehicle headlamp described in JP-A-2004-227933, the lighting unit is supported on a frame having an inner hollow space extending therethrough in a back-and-forth direction, and the frame is supported on a lamp housing by one fulcrum shaft (referred to as a leveling shaft in the JP-A-2004-227933) and two adjustment shafts having screw portions. The fulcrum shaft and the two adjustment shafts are coupled to the lamp housing at their respective rear end portions. The front end portion of the fulcrum shaft is coupled to the lower end portion of the frame, and respective front end portions of the two adjustment shafts are coupled to the upper end portion of the frame and spaced apart in a left and right direction.

In the vehicle headlamp, when the adjustment shafts are rotated and the screw portions are thereby screwed into or out of the frame, the frame and the lighting unit are integrally rotated in a horizontal direction or tilted in a substantially vertical direction about the fulcrum shaft, whereby the left and right aiming adjustment or the vertical aiming adjustment is performed.

In the vehicle headlamp described in JP-A-2004-227933, the lighting unit needs to move (rotate) along an arc-shaped locus relative to the lamp housing during the aiming adjustment. However, the locus of each of operating points, i.e., coupling points where the adjustment shafts are coupled to the frame, forms a straight line. Accordingly, a load on the lighting unit in a direction orthogonal to the locus of each of the operating points disadvantageously occurs during the aiming so that it is necessary to form margin (play) for absorbing the load in its design.

However, when the lighting unit is structured to have the above-described margin, the lighting unit tends to be moved by vibration occurring during the running of a vehicle, and accordingly the displacement of the position due to the margin tends to occur to the lighting unit.

In addition, in the vehicle headlamp described in JP-A-2004-227933, since the lighting unit is rotatably supported on the lamp housing via three coupling points of the fulcrum shaft and the two adjustment shafts which are coupled to the frame, the three coupling points are located at positions spaced from the center of gravity of the lighting unit. Accordingly, positions subjected to the vibration are located at positions spaced from the center of gravity of the lighting unit.

Further, in the vehicle headlamp described in JP-A-2004-227933, the frame supporting the lighting unit is supported on the lamp housing via the fulcrum shaft and the two adjustment shafts. Accordingly, since the total load of the lighting unit and the frame is put on the fulcrum shaft and the two adjustment shafts, the vibration suppression property in the adjustment shafts and the fulcrum shaft are relatively low.

US2008/0089086 discloses a vehicle headlamp of the type set forth in the preamble of the accompanying claim 1.

### SUMMARY OF THE INVENTION

An object of the vehicle headlamp of the present invention is to solve the above-described problems and to provide a vehicle headlamp with high vibration suppression property.

To achieve the above mentioned object, according to an aspect of the invention, there is provided a vehicle headlamp including:
a lamp housing (2) of which interior is defined as a lamp chamber (5);
a frame (16) fixed to the lamp housing (2) in the lamp chamber (5);
a lighting unit (7) including first and second coupling portions (13, 14) and supported on the frame (16) so as to be rotatable about the first coupling portion (13) in any directions;
a rotor (22) supported on the frame (16) so as to be rotatable in a horizontal direction, the rotor rotating the lighting unit (7) about the first coupling portion (13) in the horizontal direction by rotating in the horizontal direction;
a slider (26) supported on the rotor (22) so as to be movable in a back-and-forth direction, coupled to the second coupling portion (14) of the lighting unit (7), and tilting the lighting unit (7) about the first coupling portion (13) in a substantially vertical direction by being moved in the back-and-forth direction;
a rotation operation portion (31) adapted to be rotated relative to the frame (16) and rotating the rotor (22) in the horizontal direction by being rotated;
a drive operation portion (32) adapted to be rotated relative to the frame (16) and moving the slider (26) in the back-and-forth direction by being rotated,
a first transmission member transmitting a rotation force in the horizontal direction to the rotor and a second transmission member transmitting a movement force in the back-and-forth direction to the slider;
wherein the first and second coupling portions (13, 14) of the lighting unit (7) are positioned so as to be substantially vertically spaced apart. Further, at least a part of the rotation operation portion and at least a part of the drive operation portion are coaxially coupled to each other so as to be rotatable relative to each other, the rotation force is transmitted to the rotor via the first transmission member when the rotation operation portion is rotated, and the movement force is transmitted to the slider via the second transmission member when the drive operation portion is rotated. Therefore, it is possible to save additional space

Consequently, in the vehicle headlamp of the aspect of the prevent invention, the lighting unit is supported on the frame fixed to the lamp housing via the first and second coupling portions.

Consequently, since coupling points where the lighting unit couples to other members are two points, namely, the first and second coupling portions positioned in the substantially vertical direction, and the lighting unit is rotated about an axis connecting the first and second coupling portions with each other in the horizontal direction and is tilted about the first coupling portion in the substantially vertical direction, the vehicle headlamp is hardly affected by vibration which occurs during the running of a vehicle and the like, and it is possible to improve the vibration suppression property.

According to another aspect of the invention, since a center of gravity of the lighting unit is positioned between the first and second coupling portions, the first and second coupling portions, which are used as the coupling points of the lighting unit to other members, are positioned in a vertical plane including the center of gravity of the lighting unit so that it is possible to further improve the vibration suppression property.

According to still another aspect of the invention, since the rotation operation portion and the drive operation portion are disposed on one of left and right directions relative to the second coupling portion, it is possible to effectively use the limited space near the headlamp by arranging the rotation operation portion and the drive operation portion at positions which do not interfere with other members.

According to still another aspect of the invention, there are provided a lamp unit adapted to be rotatable in the horizontal direction and tiltable in the substantially vertical direction, a rotation unit rotated in the horizontal direction in synchronization with the rotor and rotating the lamp unit in the horizontal direction in synchronization with the lighting unit when the rotation operation portion is rotated, and a slide unit moved in the back-and-forth direction in synchronization with the slider and tilting the lamp unit in the substantially vertical direction in synchronization with the lighting unit when the drive operation portion is rotated.

Consequently, since the adjustment of the irradiation direction of the lighting unit and the adjustment of the irradiation direction of the lamp unit may be simultaneously performed, it is possible to easily perform the adjustment work in a short time and achieve an improvement in workability.

### BRIEF DESCRIPTION OF THE DRAWINGS

FIG. 1 is a schematic longitudinal cross-sectional view showing a first exemplary vehicle headlamp;
FIG. 2 is an exploded perspective view showing an internal structure of the first exemplary vehicle headlamp;
FIG. 3 is a perspective view showing the internal structure of the first exemplary vehicle headlamp;
FIG. 4 is a front view showing the internal structure of the first exemplary vehicle hadlamp;
FIG. 5 is a bottom view showing the internal structure of the first exemplary vehicle headlamp;
FIG. 6 is an enlarged cross-sectional view showing a coupling state between a second coupling portion of a lighting unit and other members according to the first exemplary vehicle headlamp;
FIG. 7 is a front view showing a second exemplary vehicle headlamp;
FIG. 8 is a bottom view showing an internal structure of the second exemplary vehicle headlamp;
FIG. 9 is an enlarged cross-sectional view showing the coupling state between the second coupling portion of the lighting unit and other members according to the second exemplary vehicle headlamp;
FIG. 10 is a bottom view showing a third exemplary vehicle headlamp;
FIG. 11 is a bottom view showing a fourth exemplary vehicle headlamp;
FIG. 12 is an enlarged cross-sectional view showing the coupling state between a rotation operation portion and a drive operation portion according to the fourth exemplary vehicle headlamp;
FIG. 13 is a bottom view showing a fifth exemplary vehicle headlamp;
FIG. 14 is a front view showing a sixth exemplary vehicle headlamp, which accords with an embodiment of the present invention;
FIG. 15 is a plan view showing an internal structure of the sixth exemplary vehicle headlamp in which a part thereof is omitted;
FIG. 16 is a bottom view showing the internal structure of the sixth exemplary vehicle headlamp;
FIG. 17 is an enlarged cross-sectional view showing the coupling state between the second coupling portion of the lighting unit and other members according to a seventh vehicle headlamp, which accords with an embodiment of the invention;
FIG. 18 is a bottom view showing an example using another actuator according to the seventh exemplary vehicle headlamp.

### DETAILED DESCRIPTION OF EXEMPLARY EMBODIMENTS OF THE PRESENT INVENTION

A description will be given herein below of exemplary embodiments of a vehicle headlamp with reference to the accompanying drawings.

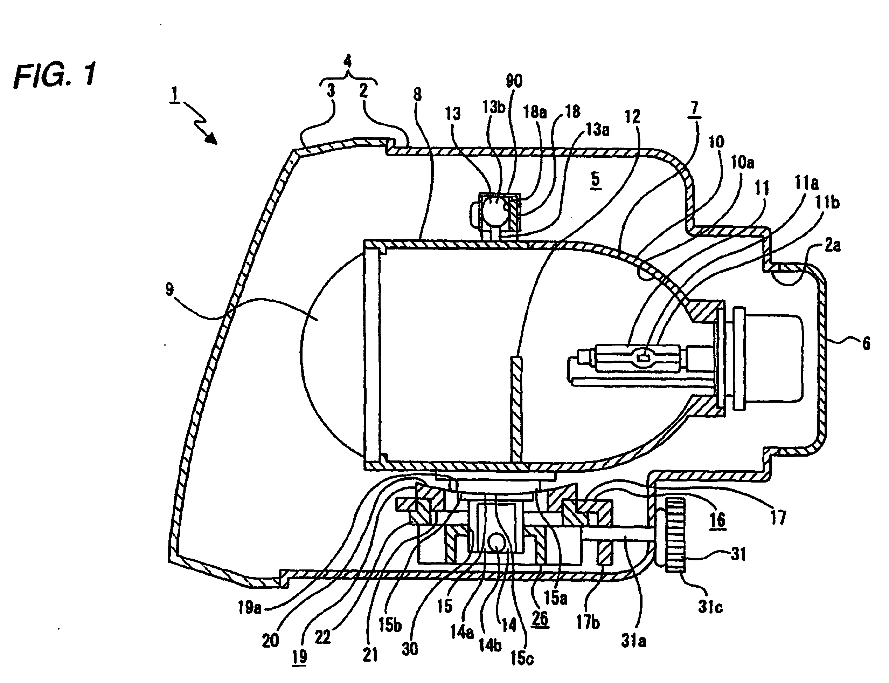

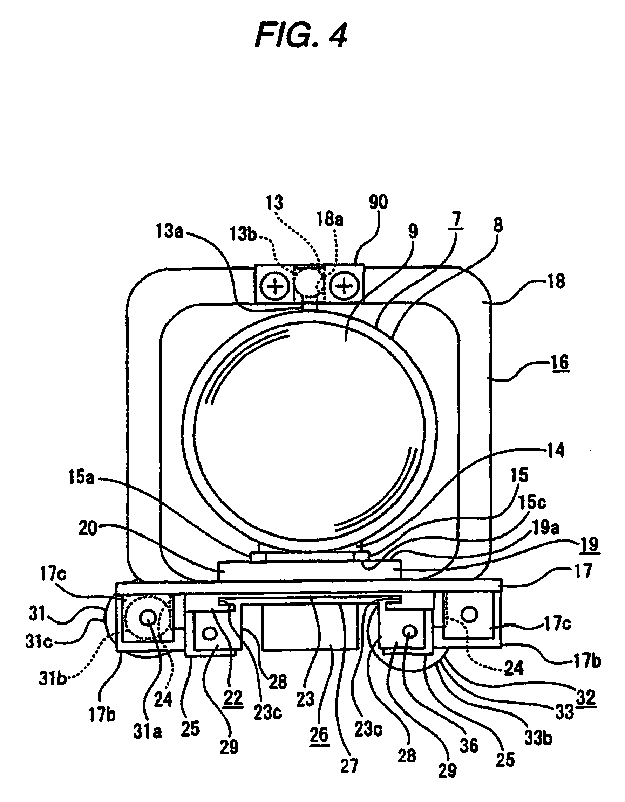

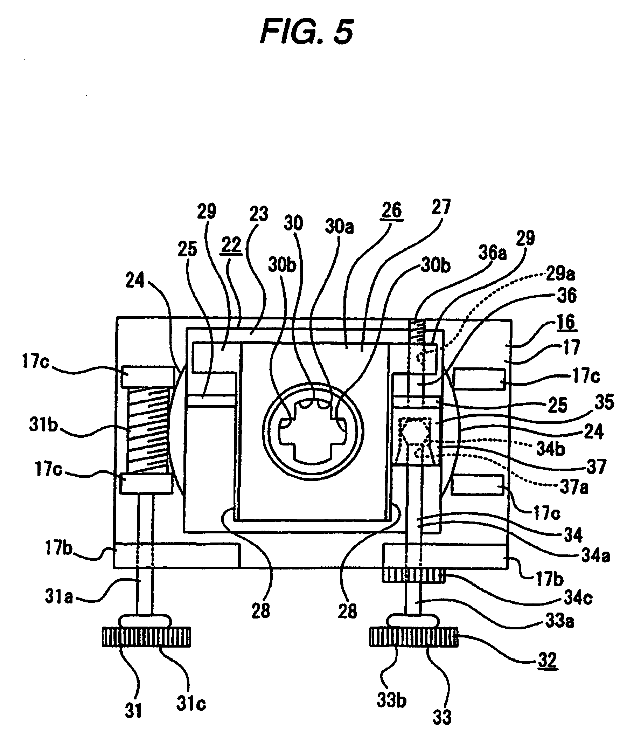

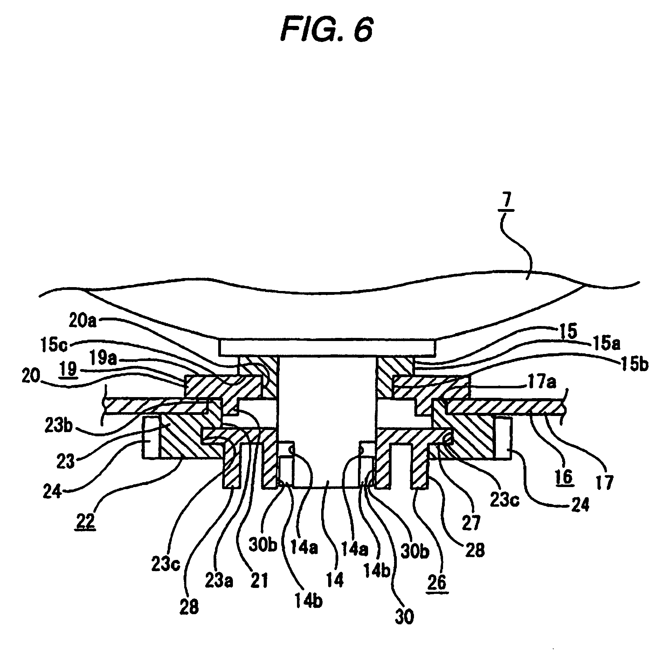

First, a description will be given to a vehicle headlamp 1 according to a first example (see FIGS. 1 to 6).

Vehicle headlamps 1 and 1 are respectively disposed to be attached to left and right end portions in the front end portion of a vehicle body.

As shown in FIG. 1, the vehicle headlamp 1 includes a lamp housing 2 having a concave portion opened in a forward direction and a cover 3 covering the opened side of the lamp housing 2. A lighting case 4 is formed by the lamp housing 2 and the cover 3, and inner space of the lighting case 4 is formed as a lamp chamber 5.

An attachment hole 2a as a through hole extending in a back-and-forth direction is formed in the rear end portion of the lamp housing 2. A back cover 6 is attached to the attachment hole 2a.

A lighting unit 7 is disposed in the lamp chamber 5.

The lighting unit 7 has a lens holder 8, a projection lens 9 attached to the front end portion of the lens holder 8, a reflector 10 attached to the rear surface of the lens holder 8, and a light source 11 attached to the rear end portion of the reflector 10.

The lens holder 8 is formed into a substantially tubular shape having hollow inner space extending therethrough in the back-and-forth direction.

In the projection lens 9, a surface on the front side thereof is formed into a convex surface and a surface on the rear side thereof is formed into a flat surface oriented in a rearward direction. The projection lens 9 has a function of reversing an image on a focal point surface including a rear-side focal point and projecting the reversed image in a forward direction.

An inner surface of the reflector 10 is formed as a reflecting surface 10a, and the reflecting surface 10a is formed into, e.g., a substantially elliptical spherical surface except for the front end portion thereof. The reflecting surface 10a is formed such that a first focal point is positioned at a light emitting portion of the light source 11 which will be described later, and a second focal point is positioned at the rear-side focal point of the projection lens 9.

The light source 11 is, e.g., a discharge bulb, and emits light from a light emitting portion 11b provided inside an outer tube 11a. The light emitted from the light emitting portion 11b travels forward, or is reflected by the reflecting surface 10a of the reflector 10, condensed on the focal point surface including the rear-side focal point of the projection lens 9, and projected forward as illumination light by the projection lens 9.

A shade 12 for blocking a part of the light emitted from the light source 11 is disposed inside the lighting unit 7.

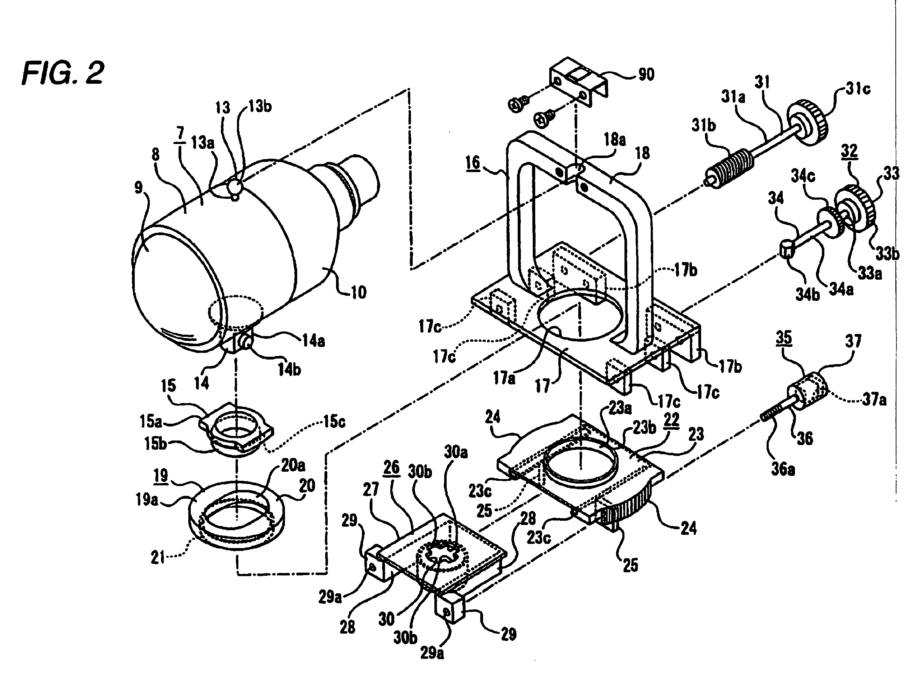

A first coupling portion 13 protruded upward is provided on the upper surface of the lighting unit 7 (see FIG. 2). The first coupling portion 13 is formed of a shaft portion 13a and a spherical portion 13b provided on the upper edge of the shaft portion 13a.

A second coupling portion 14 protruded downward is provided on the lower surface of the lighting unit 7. Each portion of the second coupling portion 14 except the upper end portion has a horizontal cross-sectional shape, and the second coupling portion 14 is formed into a substantially oval shape and has flat surface portions 14a and 14a respectively oriented in left and right directions on left and right side portions thereof. The flat surface portions 14a and 14a of the second coupling portion 14 are provided with shaft-like portions 14b and 14b protruded in a lateral direction.

The first and second coupling portions 13 and 14 are substantially vertically positioned, and the center of gravity G of the lighting unit 7 is positioned between the first and second coupling portions 13 and 14 (see FIG. 1).

A washer 15 is attached to the second coupling portion 14 of the lighting unit 7 (see FIG. 2). The washer 15 has a large diameter portion 15a positioned on the upper side thereof and a small diameter portion 15b positioned on the lower side thereof, and is attached to the upper end portion of the second coupling portion 14 so as to be externally fitted thereto. The lower surface of the large diameter portion 15a of the washer 15 is adapted to be an arc-shaped surface 15c formed into a gradual arc shape which is downwardly convex in its longitudinal cross-sectional shape.

A frame 16 is disposed in the lamp chamber 5 (see FIG. 1), and the frame 16 is fixed to the lamp housing 2.

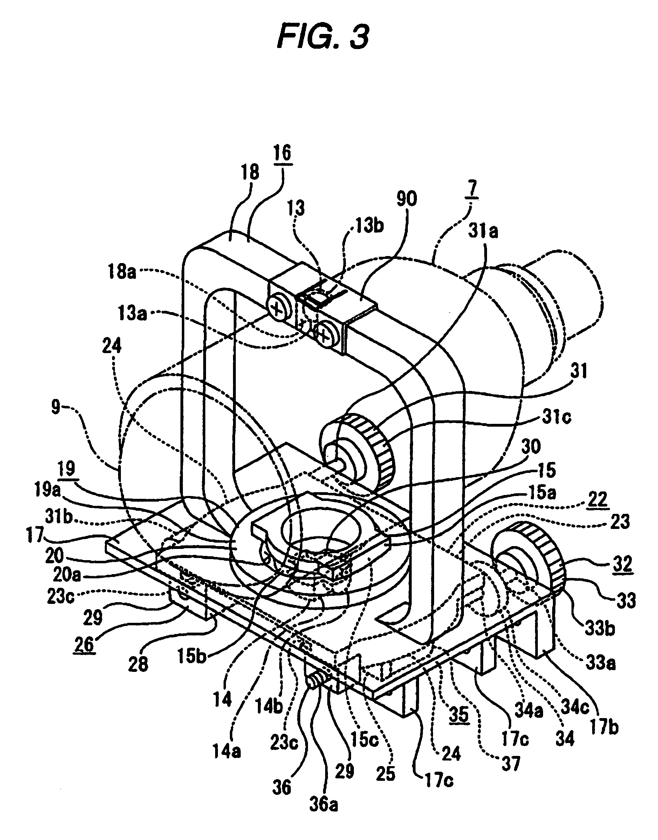

As shown in FIGS. 2 and 3, the frame 16 has a base surface portion 17 formed into a rectangular plate-like shape oriented in a vertical direction, and a supporting frame portion 18 opened in a downward direction and formed into a reversed U shape. The supporting frame portion 18 is provided at a substantially central portion in a back-and-forth direction on the upper surface of the base surface portion 17.

An insertion hole 17a as a through hole extending in the vertical direction is formed in the substantially central portion of the base surface portion 17. Bearing protruded portions 17b and 17b protruded downward are provided at rear end portions of the lower surface of the base surface portion 17 in spaced apart relation in a left and right direction. Bearing portions 17c, 17c ... are provided at left and right end portions on the lower surface of the base surface portion 17. The bearing portions 17c, 17c ... are provided in pairs, each of which has one bearing portion 17c provided at the left end portion and the other bearing portion 17c provided at the right end portion, in spaced apart relation in the back-and-forth direction.

A supporting concave portion 18a having hollow inner space extending therethrough in the vertical direction and opened in the forward direction is formed in the central portion in the left and right direction of the upper end portion of the supporting frame portion 18.

The spherical portion 13b of the first coupling portion 13 is inserted from the front into the supporting concave portion 18a formed in the supporting frame portion 18 of the frame 16 and is held by a plate spring 90, whereby the lighting unit 17 is supported on the frame 16 so as to be rotatable about the spherical portion 13b in any direction. Consequently, for example, the lighting unit 7 is adapted to be rotatable about the spherical portion 13b in a horizontal direction, and tiltable about the spherical portion 13b in a substantially vertical direction.

A spacer 19 is disposed on the upper surface of the base surface portion 17 of the frame 16. The spacer 19 is formed of a circular plate portion 20 and an annular portion 21 provided on the lower surface of the circular plate portion 20, and the circular plate portion 20 is formed with a supporting hole 20a. The supporting hole 20a has a length in the back-and-forth direction longer than a width in the left and right direction, and is formed into a shape slightly long in the back-and-forth direction. The annular portion 21 is provided at a position on the periphery of the supporting hole 20a. The upper surface of the spacer 19 is adapted to be an arc-shaped surface 19a formed into a gradual arc shape which is downwardly convex in its longitudinal cross sectional shape.

The width of the supporting hole 20a in the left and right direction is made to be slightly longer than an outer diameter of the small diameter portion 15b of the washer 15.

A rotator 22 is rotatably supported on the base surface portion 17 of the frame 16. The rotor 22 has a rectangular supported surface portion 23 oriented in the vertical direction, gear portions 24 and 24 provided respectively on left and right side surfaces of the supported surface portion 23, and shaft supporting portions 25 and 25 provided respectively on left and right end portions on the lower surface of the supported surface portion 23.

A protruded portion insertion hole 23a as a through hole extending in the vertical direction is formed in a substantially central portion of the supported surface portion 23. The supported surface portion 23 is provided with a guided protruded portion 23b formed into an annular shape at an upper opening edge of the protruded portion insertion hole 23a. An outer diameter of the guided protruded portion 23b is made to be slightly smaller than the insertion hole 17a of the frame 16, and an inner diameter thereof is made to be slightly larger than the outer diameter of the annular portion 21 of the spacer 19.

Guiding groove portions 23c and 23c opened in a mutually opposing direction are formed on the left and right side portions of the supported surface portion 23.

The gear portions 24 and 24 are protruded from the supported surface portion 23 in the lateral direction, and outer peripheral surfaces thereof are formed into an arc shape.

The shaft supporting portions 25 and 25 are formed into a plate-like shape oriented in the back-and-forth direction, and are protruded downward from the supported surface portion 23.

The guided protruded portion 23b is inserted into the insertion hole 17a formed in the base surface portion 17 of the frame 16 from below, whereby the rotor 22 is rotatably supported on the frame 16 on the lower surface side of the base surface portion 17. In a state where the rotor 22 is supported on the frame 16, the spacer 19 is supported on the rotor 22. The annular portion 21 is inserted into the insertion hole 17a of the base surface portion 17 from above and inserted into the protruded portion insertion hole 23a of the rotor 22, whereby the spacer 19 is supported on the rotor 22. Consequently, in a state where the spacer 19 is rotatable, the circular plate 20 is positioned on the upper surface side of the base surface portion 17.

In a state where the lighting unit 7 is supported on the supporting frame portion 18 of the frame 16, the second coupling portion 14 having the washer 15 attached thereto is inserted into the insertion hole 17a formed in the base surface portion 17 from above. At this time, the second coupling portion 14 is inserted into the supporting hole 20a of the spacer 19, and then into the protruded portion insertion hole 23a of the rotor 22 in this order from above. With regard to the washer 15 attached to the second coupling portion 14, the small diameter portion 15b thereof is inserted into the supporting hole 20a of the spacer 19. Accordingly, when the lighting unit 7 is tiled about the first coupling portion 13 in the substantially vertical direction, the small diameter portion 15b of the washer 15 is moved in the back-and-forth direction relative to the supporting hole 20a of the spacer 19, and the arc-shaped surface 15c of the washer 15 is slid on the arc-shaped surface 19a of the spacer 19.

A slider 26 is supported on the rotor 22 so as to be movable in the back-and-forth direction. The slider 26 has a rectangular guided surface portion 27 oriented in the vertical direction, side surface portions 28 and 28 provided at positions close to left and right ends of the guided surface portion 27, and screw portions 29 and 29 provided respectively on front end portions of the outer surfaces of the side surface portions 28 and 28.

In a substantially central portion of the guided surface portion 27, a protruded portion supporting hole 30 as a through hole extending in the vertical direction is formed. The protruded portion supporting hole 30 is formed of a long hole portion 30a formed into a substantially oval shape which is long in the back-and-forth direction, and holding portions 30b and 30b formed so as to be respectively protruded in left and right directions from the central portion in the back-and-forth direction of the long hole portion 30a.

The side surface portions 28 and 28 are protruded in a downward direction from the guided surface portion 27, and are formed into a plate-like shape which is long in the back-and-forth direction.

The screw portions 29 and 29 are respectively protruded in an outward direction from the side surface portions 28 and 28, and have screw holes 29a and 29a which are through holes extending in the back-and-forth direction.

Left and right end portions of the guided surface portion 27 are respectively inserted into the guiding groove portions 23c and 23c, whereby the slider 26 is supported on the rotor 22 so as to be movable in the back-and-forth direction.

In a state where the slider 26 is supported on the rotor 22, the second coupling portion 14 of the lighting unit 7, which is inserted into the protruded portion insertion hole 23a of the rotor 22, is inserted into the protruded portion supporting hole 30 from above. The shaft-like portions 14b and 14b of the second coupling portion 14 are respectively inserted into the holding portions 30b and 30b. Accordingly, the lighting unit 7 becomes unrotatable relative to the slider 26 and the rotor 22 supporting the slider 26 so that the lighting unit 7 is rotated integrally with the rotor 22 and the slider 20 about the first coupling portion 13 in the horizontal direction. In addition, when the slider 26 is moved in the back-and-forth direction relative to the rotor 22, the lighting unit 7 is tilted about the second coupling portion 14 in the substantially vertical direction.

A rotation operation portion 31 is rotatably supported on the frame 16. The rotation operation portion 31 is formed of a shaft portion 31a extending in the back-and-forth direction, a worm 31b provided at the front end portion of the shaft portion 31a, and an operation portion 31c provided at the rear end portion of the shaft portion 31a.

The shaft portion 31a is inserted into and supported on the bearing protruded portion 17b and the bearing portions 17c and 17c of the frame 16 positioned, e.g., on the right side thereof, whereby the rotation operation portion 31 is supported on the frame 16 so as to be rotatable in a direction around the shaft portion 31a. In a state where the rotation operation portion 31 is supported on the frame 16, the worm 31b is geared with one of the gear portions 24 and 24 of the rotor 22.

When the operation portion 31c of the rotation operation portion 31 is operated to cause the worm 31b to rotate, the washer 15, the spacer 19, the rotor 22, and the slider 26 are integrally rotated in the direction corresponding to the direction of rotation of the worm 31b so that the lighting unit 7 is rotated about the first coupling portion 13 in the horizontal direction. With the rotation of the lighting unit 7, an irradiation direction of light emitted from the light source 11 and projected via the projection lens 9 is changed so that a left and right aiming adjustment as the optical axis adjustment in a left and right direction is performed.

A drive operation portion 32 is rotatably supported on the frame 16, the rotor 22, and the slider 26. The drive operation portion 32 comprises an operation member 33, a coupling member 34 coupled to the operation member 33, and a drive member 35 coupled to the coupling member 34.

The operation member 33 is formed of a shaft portion 33a extending in the back-and-forth direction and an operation portion 33b provided at the rear end portion of the shaft portion 33a.

The coupling member 34 is formed of a shaft portion 34a extending in the back-and-forth direction, a coupling portion 34b provided at the front end portion of the shaft portion 34a, and a spur gear portion 34c provided at the rear end portion of the shaft portion 34a. The coupling portion 34b is formed into, e.g., a shape of a hexagonal column having a vertical direction as an axial direction. The front end portion of the shaft portion 33a of the operation member 33 is coupled and fixed to the rear end portion of the coupling member 34.

The drive member 35 is formed of a shaft portion 36 extending in the back-and-forth direction and a receiving portion 37 provided at the rear end portion of the shaft portion 36, and the receiving portion 37 is provided with a receiving concave portion 37a which is opened in a rearward direction. A part of the shaft portion 36 except the rear end portion is provided as a screw shaft portion 36a around which a spiral groove is formed. The coupling portion 34b of the coupling member 34 is fitted into and coupled to the receiving concave portion 37a of the drive member 35.

In a state where the coupling portion 34b is coupled to the drive member 35, the drive member 35 may be displaced in the horizontal direction relative to the coupling portion 34b.

The shaft portion 34a of the coupling member 34 is inserted into and supported on the bearing protruded portion 17b of the frame 16 positioned on the left side, the rear end portion of the shaft portion 36 of the drive member 35 is inserted into and supported on the shaft supporting portion 25 of the rotor 22, and the screw shaft portion 36a of the shaft portion 36 of the drive member 35 is screwed into the screw hole 29a of one of the screw portions 29 and 29 of the slider 26, whereby the drive operation portion 32 is rotatably supported on the frame 16, the rotor 22, and the slider 26.

In a state where the drive operation portion 32 is supported on the frame 16, the rotor 22, and the slider 26, the spur gear portion 34c of the coupling member 34 is positioned immediately rearwardly of the bearing protruded portion 17b, and the receiving portion 37 of the drive member 35 is positioned immediately rearwardly of the shaft supporting portion 25.

When the operation portion 33b of the drive operation portion 32 is operated to cause the drive member 35 to rotate, the screw portion 29 is sent in the direction corresponding to the direction of rotation of the drive member 35 to move the slider 26 in the back-and-forth direction relative to the rotor 22. When the slider 26 is moved in the back-and-forth direction, the lighting unit 7 is tilted about the first coupling portion 13 in the substantially vertical direction. With the tilt of the lighting unit 7, the irradiation direction of the light emitted from the light source 11 and projected via the projection lens 9 is changed so that a vertical aiming adjustment as the optical axis adjustment in the vertical direction is performed. At this time, since the arc-shaped surface 15c of the washer 15 is slid on the arc-shaped surface 19a of the spacer 19, the locus of the movement of the lighting unit 7 is made into a gradual arc-shaped locus about the spherical portion 13b of the first coupling portion 13 and the lighting unit 7 is thereby smoothly moved (rotated).

As described thus far, in the vehicle headlamp 1, the coupling points of the lighting unit 7 to other members are two points of the first and second coupling portions 13 and 14 positioned in the substantially vertical direction, and the lighting unit 7 is rotated about an axis connecting the first and second coupling portions 13 and 14 with each other in the horizontal direction and is tilted about the first coupling portion 13 in the substantially vertical direction during the light axis adjustment (during the aiming adjustment).

Consequently, the vehicle headlamp 1 is resistant to vibration occurring during the running of a vehicle and the like, and it is possible to achieve an improvement in resistance to vibration.

In addition, since a structure is adopted in which the lighting unit 7 is supported on the frame 16 fixed in the lamp chamber 5, the total load of the lighting unit 7 and the frame 16 is not put on the rotation operation portion 31 and the drive member 35, and it is possible to achieve the improvement in resistance to vibration.

Further, because the center of gravity G of the lighting unit 7 is positioned between the first and second coupling portions 13 and 14, the first and second coupling portions 13 and 14 of the lighting unit 7 serving as the coupling points of the lighting unit 7 to other members are positioned in a vertical plane including the center of gravity G of the lighting unit 7, and it is possible to achieve a further improvement in resistance to vibration.

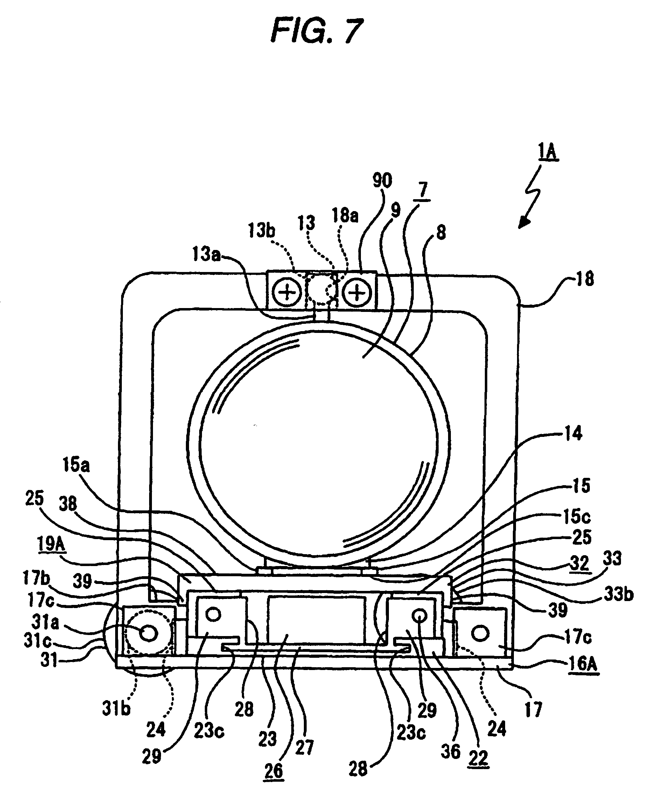

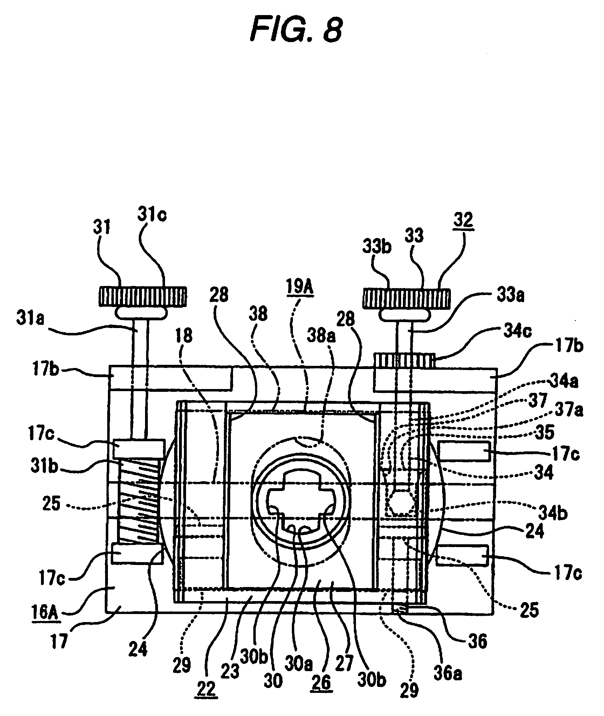

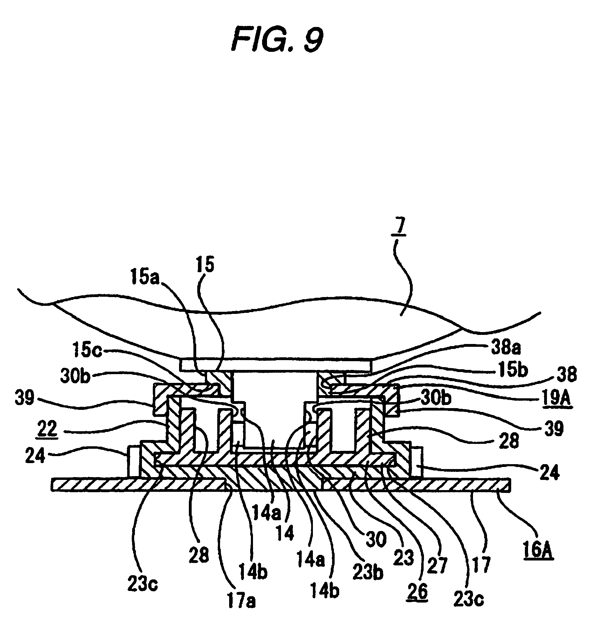

Next, a description will be given to a vehicle headlamp 1A according to a second example (see FIGS. 7 to 9).

It is to be noted that the vehicle headlamp 1A described below is different from the vehicle headlamp 1 described above only in that the rotor, the slider, the rotation operation portion, and the drive operation portion are disposed on the upper surface side of the frame. Therefore, with regard to the vehicle headlamp 1A, a detailed description will be given only to portions different from those of the vehicle headlamp 1, and the description of the other portions will be omitted by retaining the same reference numerals as those given to the same portions of the vehicle headlamp 1, or a brief description will be given thereto as needed.

In the vehicle headlamp 1A, the lighting unit 7 having the washer 15 attached thereto, a frame 16A, a spacer 19A, the rotor 22, the slider 26, the rotation operation portion 31, and the drive operation portion 32 are disposed in the lamp chamber 5.

The frame 16A is fixed to the lamp housing 2.

The frame 16A has the base surface portion 17 and the supporting frame portion 18.

The bearing protruded portions 17b and 17b which are protruded upward are provided at the rear end portions of the upper surface of the base surface portion 17 in spaced apart relation in the left and right direction. The bearing portions 17c, 17c ... are provided at the left and right end portions on the upper surface of the base surface portion 17. The bearing portions 17c, 17c ... are provided in pairs, each of which has one provided at the left end portion and the other provided at the right end portion, in spaced apart relation in the back-and-forth direction.

The spacer 19A has a rectangular plate-like portion 38 oriented in the vertical direction, and the plate-like portion 38 is formed with a supporting hole 38a as a through hole extending in the vertical direction. The supporting hole 38a is formed into the same size and shape as those of the supporting hole 20a formed in the spacer 19. The upper surface of the spacer 19A is provided as the arc-shaped surface 19a formed into a gradual arc shape which is downwardly convex in its longitudinal cross-sectional shape.

The rotor 22 is rotatably supported on the base surface portion 17 of the frame 16A. The rotor 22 is oriented in a direction obtained by vertically reversing the direction in the first example and the guided protruded portion 23b is inserted into the insertion hole 17a formed in the base surface portion 17 of the frame 16A from above, whereby the rotor 22 is rotatably supported on the upper surface side of the base surface portion 17 by the frame 16A.

The slider 26 is supported on the rotor 22 so as to be movable in the back-and-forth direction. The slider 26 is oriented in a direction obtained by vertically reversing the direction in the first example and the left and right end portions of the guided surface portion 27 are respectively inserted into the guiding groove portions 23c and 23c, whereby the slider 26 is supported on the rotor 22 so as to be movable in the back-and-forth direction.

In a state where the rotor 22 is supported on the frame 16A, the spacer 19A is attached to the upper surface of the rotor 22.

In a state where the spacer 19A is attached to the upper surface of the rotor 22, the second coupling portion 14 of the lighting unit 7 is inserted into the supporting hole 38a of the spacer 19A, the insertion hole 17a of the base surface portion 17, and the protruded portion supporting hole 30 of the slider 26 in this order from above. At this time, with regard to the washer 15 attached to the second coupling portion 14, the small diameter portion 15b thereof is inserted into the supporting hole 38a of the spacer 19A. Consequently, when the lighting unit is tilted about the first coupling portion 13 in the substantially vertical direction, the small diameter portion 15b of the washer 15 is moved in the back-and-forth direction relative to the supporting hole 38a of the spacer 19A, and the arc-shaped surface 15c of the washer 15 is slid on the arc-shaped surface 19a of the spacer 19A.

The rotation operation portion 31 is rotatably supported on the frame 16A. The worm 31b of the rotation operation portion 31 is geared with one of the gear portions 24 and 24 of the rotor 22.

When the operation portion 31c of the rotation operation portion 31 is operated to cause the worm 31b to rotate, the washer 15, the spacer 19A, the rotor 22, and the slider 26 are integrally rotated in the direction corresponding to the direction of rotation of the worm 31b, and the lighting unit 7 is rotated about the first coupling portion 13 in the horizontal direction so that the left and right aiming adjustment is performed.

The drive operation portion 32 is rotatably supported on the frame 16A, the rotor 22, and the slider 26. In the drive operation portion 32, the screw shaft portion 36a of the shaft portion 36 of the drive member 35 is screwed into the screw hole 29a of the screw portion 29 of the slider 26.

When the operation portion 33b of the drive operation portion 32 is operated to cause the drive member 35 to rotate, the screw portion 29 is sent in the direction corresponding to the direction of rotation of the drive member 35 to move the slider 26 in the back-and-forth direction relative to the rotor 22, and the lighting unit 7 is tilted about the first coupling portion 13 in the substantially vertical direction so that the vertical aiming adjustment is performed. At this time, since the arc-shaped surface 15c of the washer 15 is slid on the arc-shaped surface 19c of the spacer 19A, the locus of the movement of the lighting unit 7 is formed into the gradual arc-shaped locus about the spherical portion 13b of the first coupling portion 13, and the lighting unit 7 is thereby smoothly moved (rotated).

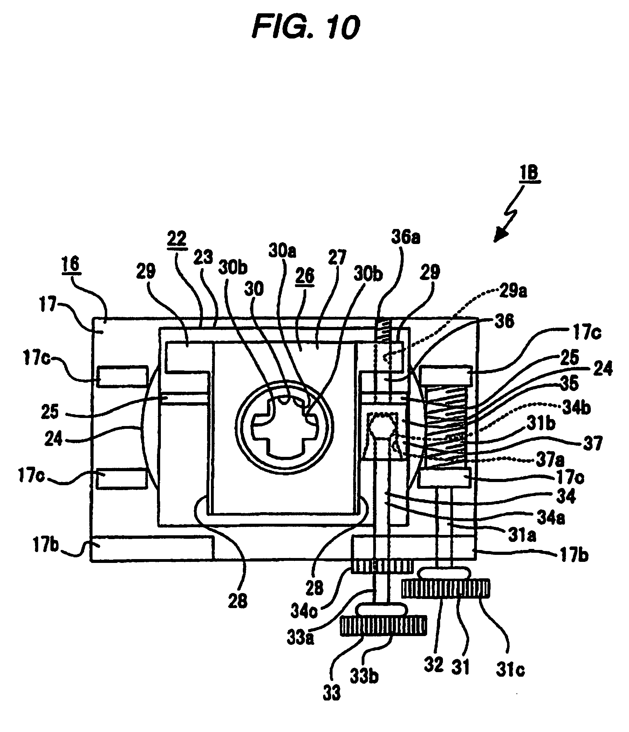

Next, a description will be given to a vehicle headlamp 1B according to a third example (see FIG. 10).

It is to be noted that the vehicle headlamp 1B described below is different from the vehicle headlamp 1 described above only in that the rotation operation portion and the drive operation portion are both disposed to one side in the left and right direction relative to the second coupling portion. Therefore, with regard to the vehicle headlamp 1B, a detailed description will be given only to portions different from those of the vehicle headlamp 1, and the description of the other portions will be omitted by retaining the same reference numerals as those given to the same portions of the vehicle headlamp 1, or a brief description will be given thereto as needed.

In the vehicle headlamp 1B, the lighting unit 7 having the washer 15 attached thereto, the frame 16, the spacer 19, the rotor 22, the slider 26, the rotation operation portion 31, and the drive operation portion 32 are disposed in the lamp chamber 5.

The rotation operation portion 31 is rotatably supported on the frame 16. The shaft portion 31a is inserted into and supported on the bearing protruded portion 17b and the bearing portions 17c and 17c of the frame 16 positioned, e.g., on the left side, whereby the rotation operation portion 31 is supported on the frame 16 so as to be rotatable in the direction around the shaft portion 31a. In a state where the rotation operation portion 31 is supported on the frame 16, the worm 31b is geared with one of the gear portions 24 and 24 of the rotor 22.

When the operation portion 31c of the rotation operation portion 31 is operated to cause the worm 31b to rotate, the washer 15, the spacer 19, the rotor 22, and the slider 26 are integrally rotated in the direction corresponding to the direction of rotation of the worm 31b, and the lighting unit 7 is rotated about the first coupling portion 13 in the horizontal direction so that the left and right aiming adjustment is performed.

The drive operation portion 32 is rotatably supported on the frame 16, the rotor 22, and the slider 26. The shaft portion 34a of the coupling member 34 is inserted into and supported on the bearing protruded portion 17b of the frame 16 positioned on the left side, the rear end portion of the shaft portion 36 of the drive member 35 is inserted into and supported on the shaft supporting portion 25 of the rotor 22, and the screw shaft portion 36a of the shaft portion 36 of the drive member 35 is screwed into the screw hole 29a of one of the screw portions 29 and 29 of the slider 26, whereby the drive operation portion 32 is rotatably supported on the frame 16, the rotor 22, and the slider 26.

The rotation operation portion 31 and the drive operation portion 32 are disposed side by side in the left and right direction on the side of the left end portion of the frame 16. It is to be noted that the rotation operation portion 31 and the drive operation portion 32 may be disposed side by side in the left and right direction on the side of the right end portion of the frame 16.

When the operation portion 33b of the drive operation portion 32 is operated to cause the drive member 35 to rotate, the screw portion 29 is sent in the direction corresponding to the direction of rotation of the drive member 35 to move the slider 26 in the back-and-forth direction relative to the rotor 22, and the lighting unit 7 is tilted about the first coupling portion 13 in the substantially vertical direction so that the vertical aiming adjustment is performed.

In the vehicle headlamp 1B, since the rotation operation portion 31 and the drive operation portion 32 are disposed to one side in the left and right direction relative to the second coupling portion 14, it is possible to achieve effective use of space by disposing the rotation operation portion 31 and the drive operation portion 32 at positions which do not interfere with other members provided in a vehicle.

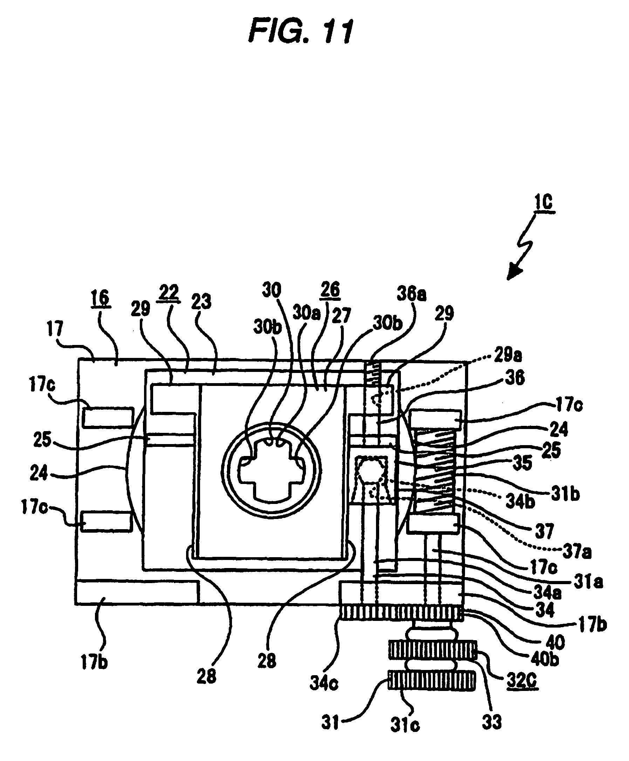

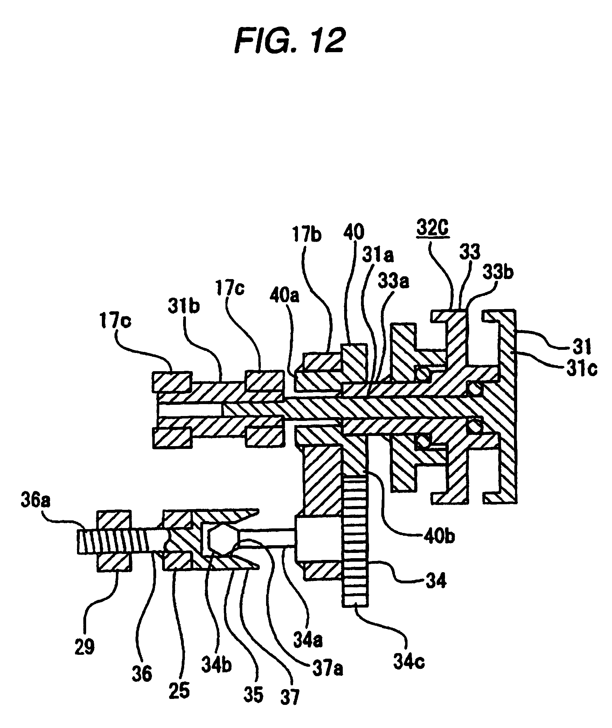

Next, a description will be given to a vehicle headlamp 1C according to a fourth example, which accords with the claimed invention (see FIGS. 11 and 12).

It is to be noted that the vehicle headlamp 1C described below is different from the vehicle headlamp 1 described above only in that at least a part of the rotation operation portion and at least a part of the drive operation portion are coaxially coupled to each other so as to be rotatable relative to each other. Therefore, with regard to the vehicle headlamp 1C, a detailed description will be given only to portions different from those of the vehicle headlamp 1, and the description of the other portions will be omitted by retaining the same reference numerals as those given to the same portions of the vehicle headlamp 1, or a brief description will be given thereto as needed.

In the vehicle headlamp 1C, the lighting unit 7 having the washer 15 attached thereto, the frame 16, the spacer 19, the rotor 22, the slider 26, the rotation operation portion 31, and a drive operation portion 32C are disposed in the lamp chamber 5.

The rotation operation portion 31 is rotatably supported on the frame 16. The shaft portion 31a is inserted into and supported on the bearing protruded portion 17b and the bearing portions 17c and 17c of the frame 16 positioned, e.g., on the left side, whereby the rotation operation portion 31 is supported on the frame 16 so as to be rotatable in the direction around the shaft portion 31a. In a state where the rotation operation portion 31 is supported on the frame 16, the worm 31b is geared with one of the gear portions 24 and 24 of the rotor 22.

The worm 31b functions as a first transmission member for transmitting a rotation force in the horizontal direction to the rotor 22.

The drive operation portion 32C is rotatably supported on the frame 16, the rotor 22, and the slider 26. The drive operation portion 32C comprises the operation member 33, a transmission gear 40 coaxially fixed to the operation member 33, the coupling member 34 to which the rotation force of the transmission gear 40 is transmitted to be rotated, and the drive member 35 coupled to the coupling member 34.

The operation member 33 is formed of the shaft portion 33a extending in the back-and-forth direction and the operation portion 33b provided at the rear end portion of the shaft portion 33a.

The transmission gear 40 is formed of a shaft portion 40a and a gear portion 40b provided at the rear end of the shaft portion 40a, and the gear portion 40b is fixed to the front end portion of the shaft portion 33a of the operation member 33 so as to be externally fitted thereto.

The coupling member 34 is formed of the shaft portion 34a extending in the back-and-forth direction, the coupling portion 34b provided at the front end portion of the shaft portion 34, and the spur gear portion 34c provided at the rear end portion of the shaft portion 34a, and the coupling portion 34b is formed into, e.g., the shape of a hexagonal column having the vertical direction as the axial direction.

The drive member 35 is formed of the shaft portion 36 extending in the back-and-forth direction and the receiving portion 37 provided at the rear end portion of the shaft portion 36, and the receiving portion 37 is formed with the receiving concave portion 37a which is opened in the rearward direction. A part of the shaft portion 36 except the rear end portion is provided as the screw shaft portion 36a around which the spiral groove is formed. The coupling portion 34b of the coupling member 34 is fitted into and coupled to the receiving concave portion 37a of the drive member 35.

In a state where the coupling portion 34b is coupled to the drive member 35, the drive member 35 may be displaced in the horizontal direction relative to the coupling portion 34b.

The shaft portion 31a of the rotation operation portion 31 is passed through the operation member 33 and the transmission gear 40 of the drive operation portion 32C, and the operation member 33, the rotation operation portion 31, and the transmission gear 40 are coaxially disposed. The operation member 33 and the rotation operation portion 31 are supported so as to be rotatable relative to each other, the rotation operation portion 31 is rotated relative to the operation member 33 and the transmission gear 40, and the operation member 33 and the transmission gear 40 are integrally rotated relative to the rotation operation portion 31.

The transmission gear 40 and the coupling member 34 are respectively inserted into and supported on the bearing protruded portion 17b so as to be arranged side by side in a lateral direction, the rear end portion of the shaft portion 36 of the drive member 35 is inserted into and supported on the shaft supporting portion 25 of the rotor 22, and the screw shaft portion 36a of the shaft portion 36 of the drive member 35 is screwed into the screw hole 29a of one of the screw portions 29 and 29 of the slider 26, whereby the drive operation portion 32C is rotatably supported on the frame 16, the rotor 22, and the slider 26.

In a state where the drive operation portion 32C is supported on the frame 16, the rotor 22, and the slider 26; the transmission gear 40 and the spur gear portion 34c of the coupling member 34 are positioned immediately rearwardly of the bearing protruded portion 17b, and the receiving portion 37 of the drive member 35 is positioned immediately rearwardly of the shaft supporting portion 25. In the coupling member 34, the spur gear portion 34c is geared with the gear portion 40b of the transmission gear 40.

When the operation portion 31c of the rotation operation portion 31 is operated and the rotation operation portion 31 is rotated relative to the operation member 33 and the transmission gear 40 of the drive operation portion 32C to cause the worm 31b to rotate (see Fig. 12) ; the washer 15, the spacer 19, the rotor 22, and the slider 26 are integrally rotated in the direction corresponding to the direction of rotation of the worm 31b, and the lighting unit 7 is rotated about the first coupling portion 13 in the horizontal direction so that the left and right aiming adjustment is performed.

On the other hand, when the operation portion 33b of the drive operation portion 32C is operated to cause the operation member 33 and the transmission gear 40 to integrally rotate relative to the rotation operation portion 31, the rotation force of the transmission gear 40 is transmitted to the spur gear portion 34c to cause the coupling member 34 and the drive member 35 to rotate. When the drive member 35 is rotated, the screw portion 29 is sent in the direction corresponding to the direction of rotation of the drive member 35 to move the slider 26 in the back-and-forth direction relative to the rotor 22, and the lighting unit 7 is tiled about the first coupling portion 13 in the substantially vertical direction so that the vertical aiming adjustment is performed.

Consequently, the transmission gear 40 functions as the second transmission member for transmitting a movement force to the slider 26 when the drive operation portion 32C is rotated.

As described above, by coaxially disposing the rotation operation portion 31 and a part of the drive operation portion 32C, it is possible to save space.

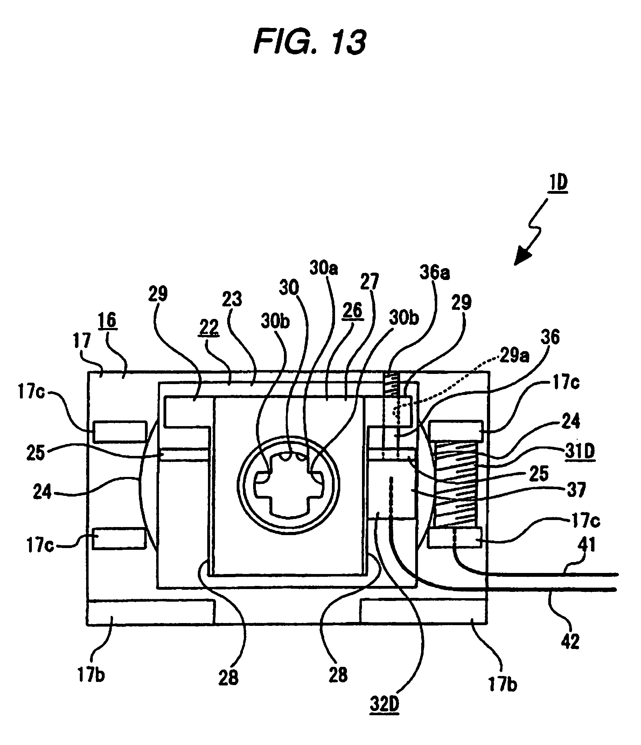

Next, a description will be given to a vehicle headlamp 1D according to a fifth example (see FIG. 13).

It is to be noted that the vehicle headlamp 1D described below is different from the vehicle headlamp 1 described above only in that a wire is used as a part of each of the rotation operation portion and the drive operation portion. Therefore, with regard to the vehicle headlamp 1D, a detailed description will be given only to portions different from those of the vehicle headlamp 1, and the description of the other portions will be omitted by retaining the same reference numerals as those given to the same portions of the vehicle headlamp 1, or a brief description will be given thereto as needed.

In the vehicle headlamp 1D, the lighting unit 7 having the washer 15 attached thereto, the frame 16, the spacer 19, the rotor 22, the slider 26, a rotation operation portion 31D, and a drive operation portion 32D are disposed in the lamp chamber 5.

The rotation operation portion 31D is rotatably supported on the frame 16. The rotation operation portion 31D has the worm 31b and a first wire 41 with one end portion coupled to the worm 31b. The other end portion of the first wire 41 is coupled to an operation portion operated by an adjuster which is not shown.

In the rotation operation portion 31D, the worm 31b is rotatably supported between the bearing portions 17c and 17c of the frame 16 positioned, e.g., on the left side, and the worm 31b is geared with one of the gear portions 24 and 24 of the rotor 22.

When the operation portion is operated by the adjuster to cause the first wire 41 to rotate, the worm 31b is rotated with the rotation of the first wire 41. When the worm 31b is rotated, the washer 15, the spacer 19, the rotor 22, and the slider 26 are integrally rotated in the direction corresponding to the direction of rotation of the worm 31b, and the lighting unit 7 is rotated about the first coupling portion 13 in the horizontal direction so that the left and right aiming adjustment is performed.

The drive operation portion 32D has the drive member 35 and a second wire 42 with one end portion coupled to the drive member 35. The other end portion of the second wire 42 is coupled to the operation portion operated by the adjuster. The rear end portion of the shaft portion 36 is inserted into and supported on the shaft supporting portion 25 of the rotor 22, and the screw shaft portion 36a of the shaft portion 36 is screwed into the screw hole 29a of one of the screw portions 29 and 29 of the slider 26, whereby the drive member 35 is rotatably supported on the rotor 22 and the slider 26.

When the operation portion is operated by the adjuster to cause the second wire 42 to rotate, the drive member 35 is rotated with the rotation of the second wire 42. When the drive member 35 is rotated, the screw portion 29 is sent in the direction corresponding to the direction of rotation of the drive member 35 to move the slider 26 in the back-and-forth direction relative to the rotor 22, and the lighting unit 7 is tilted about the first coupling portion 13 in the substantially vertical direction so that the vertical aiming adjustment is performed.

In the vehicle headlamp 1D, since the first and second wires 41 and 42 are used as parts constituting the rotation operation portion 31D and the drive operation portion 32D, respectively, for performing the aiming adjustment, it is possible to reduce the number of parts supported on the frame 16 and the rotor 22, and achieve a reduction in manufacturing cost and space saving by the reduction in the number of parts. In particular, in a case where it is difficult to secure space for disposing the operation portion 31c and the operation member 33 due to a vehicle structure or the like, it is effective to use the first and second wires 41 and 42.

In addition, with the use of the first and second wires 41 and 42, it becomes possible to perform the aiming adjustment by operating the operation portion coupled to the other end portions of the first and second wires 41 and 42 so that the aiming adjustment may be performed by remote control.

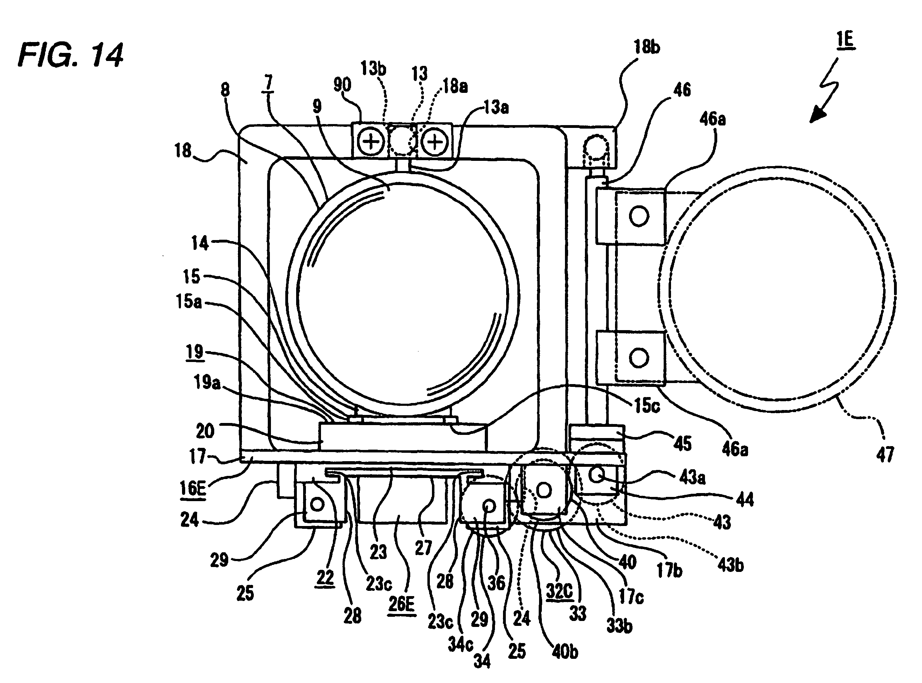

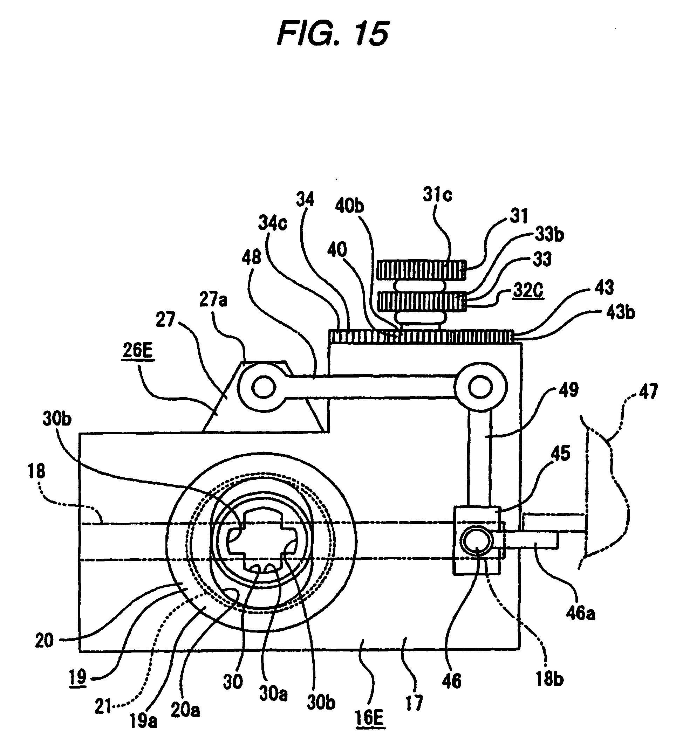

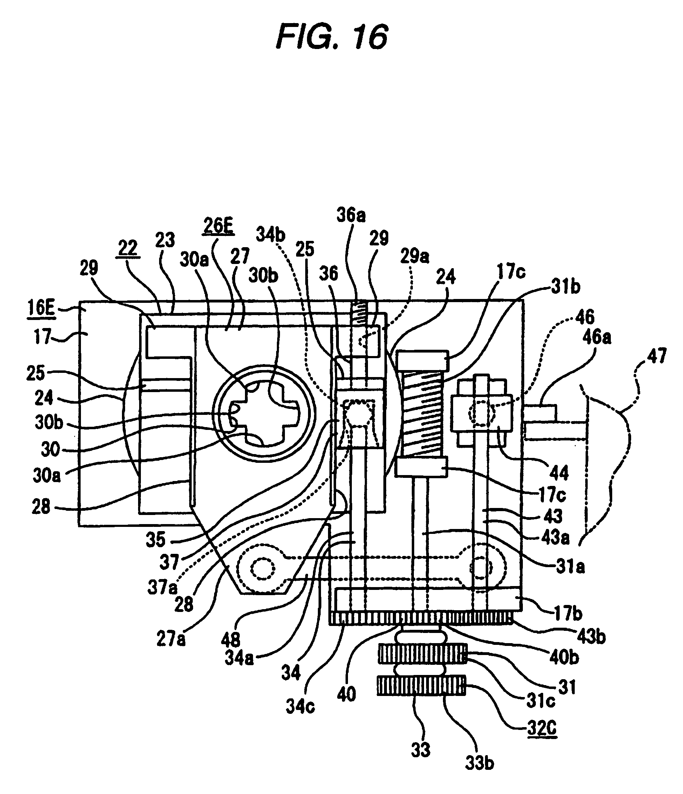

Next, a description will be given to a vehicle headlamp 1E according to a sixth example, which accords with an embodiment of the claimed invention (see FIGS. 14 to 16).

It is to be noted that the vehicle headlamp 1E described below is different from the vehicle headlamp 1 described above only in that a lamp unit having a light source is provided in addition to the lighting unit, and a mechanism for simultaneously performing the aiming adjustments of the lighting unit and the lamp unit is provided. Therefore, with regard to the vehicle headlamp 1E, a detailed description will be given only to portions different from those of the vehicle headlamp 1, and the description of the other portions will be omitted by retaining the same reference numerals as those given to the same portions of the vehicle headlamp 1, or a brief description will be given thereto as needed.

In the vehicle headlamp 1E, the lighting unit 7 having the washer 15 attached thereto, a frame 16E, the spacer 19, the rotor 22, a slider 26E, the rotation operation portion 31, the drive operation portion 32C provided in the fourth example, an interlock member 43, a slide unit 44, a lid member 45, and a coupling shaft 46 are disposed in the lamp chamber 5.

The frame 16E has the base surface portion 17 formed into the plate-like shape oriented in the vertical direction and the supporting frame portion 18 formed into the reversed U shape which is opened in the downward direction. A supporting protruded portion 18b protruded in the lateral direction is provided at the upper end portion of the supporting frame portion 18.

The slider 26E is supported on the rotor 22 so as to be movable in the back-and-forth direction. The slider 26E has a protruded portion 27a protruded in the rearward direction at its rear end portion. In a state where the slider 26E is supported on the rotor 22, the protruded portion 27a is protruded rearward from the rotor 22.

The rotation operation portion 31 and the drive operation portion 32C are rotatably supported on the frame 16E. The structure and disposition of each of the rotation operation portion 31, the drive operation portion 32C, and the transmission gear 40 are the same as those in the fourth example.

The interlock member 43 is rotatably supported on the bearing protruded portion 17b on the base surface portion 17. The interlock member 43 is formed of a shaft portion 43a extending in the back-and-forth direction and a gear portion 43b provided at the rear end of the shaft portion 43a, and a screw portion having a screw groove is formed at the front end portion of the shaft portion 43a. In the interlock member 43, the rear end portion of the shaft portion 43a is supported on the bearing protruded portion 17b, and the gear portion 43b is geared with the transmission gear 40.

Accordingly, when the operation portion 33b of the drive operation portion 32C is operated to cause the transmission gear 40 to rotate integrally with the operation member 33, the coupling member 34 and the interlock member 43 respectively having the spur gear portion 34c and the gear portion 43b each geared with the transmission gear 40 are rotated in synchronization with each other in the same direction, and the drive member 35 having the coupling member 34 coupled thereto and the interlock member 43 are rotated in synchronization with each other in the same direction.

The slide unit 44 is supported at the left end portion on the base surface portion 17 of the frame 16E so as to be movable in the back-and-forth direction. The slide unit 44 is formed with a holding concave portion opened in the upward direction. The slide unit 44 is formed with a spiral groove extending therethrough in the back-and-forth direction which is not shown, and the screw portion of the interlock portion 43 is geared with the spiral groove. Accordingly, when the interlock member 43 is rotated, the spiral groove is sent in the direction corresponding to the direction of rotation of the interlock member 43 to move the slide unit 44 in the back-and-forth direction.

The lid member 45 is attached to the upper surface of the slide unit 44. The lid member 45 is moved integrally with the slide unit 44 in the back-and-forth direction.

The coupling shaft 46 is rotatably coupled between the supporting protruded portion 18b of the frame 16E and the slide unit 44. Upper and lower end portions of the coupling shaft 46 are formed into a spherical shape, and the lower end portion of the coupling shaft 46 is protruded downward from the lid member 45. The coupling shaft 46 has attaching protruded portions 46a and 46a which are vertically spaced apart and laterally protruded, and is adapted to be rotatable in any direction relative to the supporting protruded portion 18b and the slide unit 44. The coupling shaft 46 functions as a rotation unit for rotation in the horizontal direction.

A lamp unit 47 is attached to the attaching protruded portions 46a and 46a of the coupling shaft 46. The lamp unit 47 is a unit for, e.g., a high beam for irradiating a distant position, and the lighting unit 7 is a unit for, e.g., a low beam for irradiating a near position.

The lid member 45 and the slider 26E are coupled to each other using first and second links 48 and 49. One end portion of the first link 48 is rotatably supported on the protruded portion 27a of the slider 26E, the other end portion of the fist link 48 and one end portion of the second link 49 are coupled to each other so as to be rotatable relative to each other, and the other end portion of the second link 49 is attached to the coupling shaft 46 functioning as the rotation unit.

When the operation portion 31c of the rotation operation portion 31 is operated and the rotation operation portion 31 is rotated relative to the operation member 33 of the drive operation portion 32C to cause the worm 31b to rotate, the washer 15, the spacer 19, the rotor 22, and the slider 26E are integrally rotated in the direction corresponding to the direction of rotation of the worm 31b, and the lighting unit 7 is rotated about the first coupling portion 13 in the horizontal direction so that the left and right aiming adjustment is performed. The rotation force of the slider 26E is transmitted to the coupling shaft 46 via the first and second links 48 and 49, and the coupling shaft 46 is rotated relative to the slide unit 44 in synchronization with the slider 26E. Consequently, the lamp unit 47 is rotated in the horizontal direction with the rotation of the coupling shaft 46 so that the left and right aiming adjustment of the lamp unit 47 is performed simultaneously with the left and right aiming adjustment of the lighting unit 7.

On the other hand, when the operation portion 33b of the drive operation portion 32C is operated and the drive operation portion 32C is rotated relative to the rotation operation portion 31, the drive member 35 and the interlock member 43 are rotated in the same direction in synchronization with each other as described above, and the slider 26E, the slide unit 44, the lid member 45, and the coupling shaft 46 are moved in the back-and-forth direction in synchronization with each other. With the movement of the slider 26E, the lighting unit 7 is tilted about the first coupling portion 13 in the substantially vertical direction, and the lamp unit 47 is tilted about the upper portion of the coupling shaft 46 in the substantially vertical direction with the movement of the slide unit 44 and the like so that the vertical aiming adjustment of the lamp unit 47 is performed simultaneously with the vertical aiming adjustment of the lighting unit 7.

In the vehicle headlamp 1E, as described above, since the aiming adjustments of the lighting unit 7 and the lamp unit 47 may be simultaneously performed, it is possible to easily perform the adjustment work in a short time and achieve an improvement in workability.

In addition, since an individual aiming adjustment mechanism for each of the lighting unit 7 and the lamp unit 47 is not necessary, it is possible to achieve a reduction in the size and the manufacturing cost of the vehicle headlamp 1E.

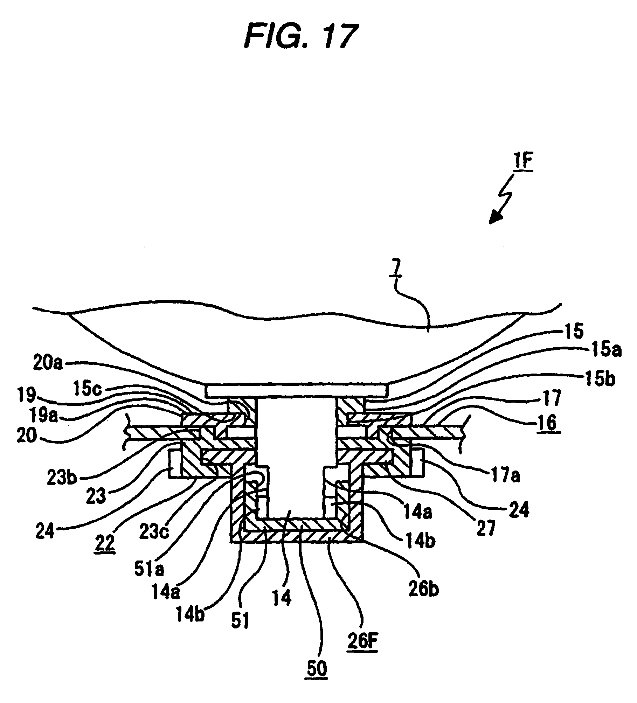

Next, a description will be given to a vehicle headlamp 1F according to a seventh example, which accords with an embodiment of the claimed invention (see FIG. 17).

It is to be noted that the vehicle headlamp 1F described below is different from the vehicle headlamp 1 described above only in that the shape of the slider is different, and an actuator is disposed inside the slider. Therefore, with regard to the vehicle headlamp 1F, a detailed description will be given only to portions different from those of the vehicle headlamp 1, and the description of the other portions will be omitted by retaining the same reference numerals as those given to the same portions of the vehicle headlamp 1, or a brief description will be given thereto as needed.

In the vehicle headlamp 1F, the lighting unit 7 having the washer 15 attached thereto, the frame 16, the spacer 19, the rotor 22, a slider 26F, the rotation operation portion 31, the drive operation portion 32, and an actuator 50 are disposed in the lamp chamber 5.

The slider 26F is opened in the upward direction and has disposition space 26b inside the slider 26F. The slider 26F is not formed with the protruded portion supporting hole 30 which is formed in the slider 26.

The actuator 50 has, e.g., a direct current motor which is not shown, and is operated with a drive force of the direct current motor. The actuator 50 functions as a drive source for performing a leveling adjustment for rectifying the tilt of the optical axis fluctuated by the weight of an on-vehicle article.

The actuator 50 is disposed in the disposition space 26b of the slider 26F, and has a holding portion 51 movable in the back-and-forth direction relative to the slider 26F. The holding portion 51 is formed with a protruded portion supporting hole 51a similar to the protruded portion supporting hole 30 formed in the slider 26.

The second coupling portion 14 of the lighting unit 7 inserted in the protruded portion insertion hole 23a of the rotor 22 is inserted into the protruded portion supporting hole 51a of the actuator 50 from above.

When the operation portion 31c of the rotation operation portion 31 is operated to cause the worm 31b to rotate, the washer 15, the spacer 19, the rotor 22, the slider 26F, and the actuator 50 are integrally rotated in the direction corresponding to the direction of rotation of the worm 31b, and the lighting unit 7 is rotated about the first coupling portion 13 in the horizontal direction so that the left and right aiming adjustment is performed.

When the operation portion 33b of the drive operation portion 32 is operated to cause the drive member 35 to rotate, the screw portion 29 is sent in the direction corresponding to the direction of rotation of the drive member 35 to integrally move the slider 26F and the actuator 50 in the back-and-forth direction relative to the rotor 22, and the lighting unit 7 is tilted about the first coupling portion 13 in the substantially vertical direction so that the vertical aiming adjustment is performed.

When the actuator 50 is operated to move the holding portion 51 in the back-and-forth direction, the lighting unit 7 is tilted about the first coupling portion 13 in the substantially vertical direction with the movement of the holding portion 51 so that the leveling adjustment is performed.

As described above, in the vehicle headlamp 1F, since the leveling adjustment may be performed in addition to the aiming adjustment by providing the actuator 50, it is possible to achieve an improvement in functionality.

In addition, since the actuator 50 is disposed inside the slider 26F, the reduction in size is not impaired even by providing the actuator 50.

In the above-described mechanism for performing the leveling by using the actuator 50, it is possible to add, e.g., a swivel function which changes the irradiation direction of the light in pursuit of the direction of travel of a vehicle. The swivel function is exerted by the rotation of the lighting unit 7 in the horizontal direction.

For example, the holding portion 51 of the actuator 50 is structured to be rotatable in the horizontal direction in addition to being movable in the back-and-forth direction. By structuring the holding portion 51 in this manner, when the holding portion 51 is moved in the back-and-forth direction during the operation of the actuator 50, the above-described leveling adjustment is performed. When the holding portion 51 is rotated during the operation of the actuator 50, the lighting unit 7 is rotated about the first coupling portion 13 in the horizontal direction so that the swivel function is exerted.

Thus, by making the holding portion 51 rotatable, it is possible to perform the aiming adjustment and the leveling adjustment and, at the same time, add the swivel function, and thereby achieve an improvement in functionality.

In addition, since the actuator 50 having the holding portion 51 movable in the back-and-forth direction and rotatable is disposed inside the slider 26F, the reduction in size is not impaired even by providing the actuator 50.

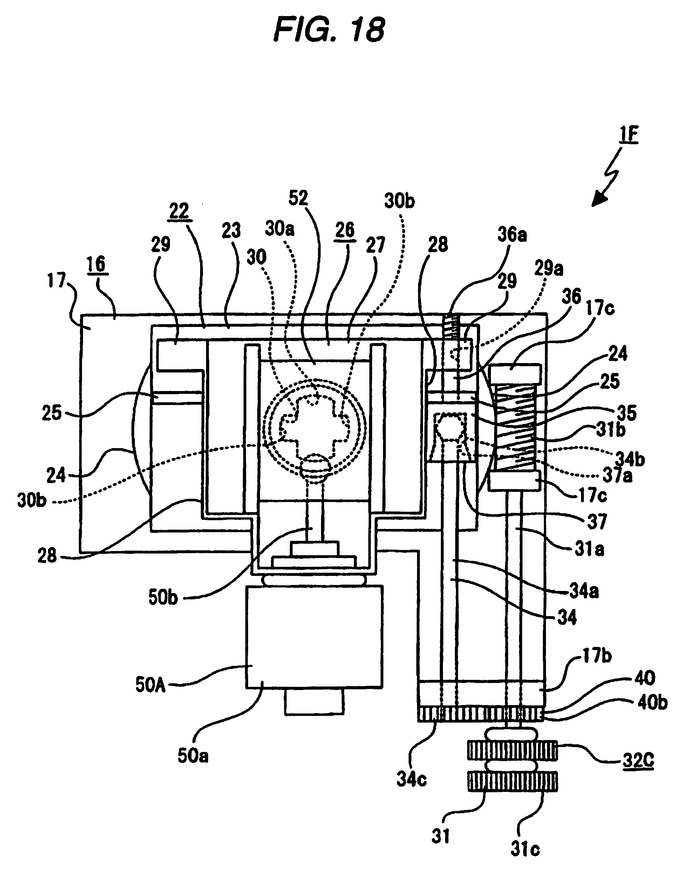

In the foregoing, the actuator 50 using the direct current motor as the drive source of the leveling adjustment is shown as an example. However, as shown in FIG. 18, it is possible to use an actuator 50A comprising a plunger as the drive source of the leveling adjustment.

The actuator 50A has a main body 50a and an output shaft 50b which is moved in the back-and-forth direction relative to the main body 50a.

When the actuator 50A is used, for example, a structure is adopted in which a second slider 52 is movable in the back-and-forth direction relative to the slider 26, the actuator 50A is fixed to the rear end portion of the slider 26, and the second coupling portion 14 of the lighting unit 7 is coupled to the second slider 52.

With this structure, the rotor 22, the slider 26, the second slider 52, and the actuator 50A are integrally rotated in the horizontal direction and the lighting unit 7 is rotated about the first coupling portion 13 in the horizontal direction during the left and right aiming adjustment, and the slider 26, the second slider 52, and the actuator 50A are integrally moved in the back-and-forth direction and the lighting unit 7 is tilted about the first coupling portion 13 in the substantially vertical direction during the vertical aiming adjustment.

In addition, the second slider 52 is moved in the back-and-forth direction relative to the slider 26 by the operation of the output shaft 50b of the actuator 50A, and the lighting unit 7 is tilted about the first coupling portion 13 in the substantially vertical direction during the leveling adjustment.

In the above-described seventh example, there is shown an example in which the rotor 22 and the slider 26F inside which the actuator 50 is disposed, or the rotor 22 and the slider 26 to which the actuator 50A is fixed are disposed on the lower side of the base surface portion 17 of the frame 16. However, similarly to the second example, it is possible to dispose the rotor 22 and the slider 26F inside which the actuator 50 is disposed, or the rotor 22 and the slider 26 to which the actuator 50A is fixed on the upper side of the base surface portion 17.

In addition, in the structure of the seventh example in which the actuator 50 or the actuator SOA is provided, similarly to the fourth it is possible to adopt a structure in which the rotation operation portion 31 and a part of the drive operation portion 32 are coaxially disposed.

Further, in the structure of the seventh example in which the actuator 50 or the actuator 50A is provided, similarly to the sixth it is possible to adopt a structure in which the aiming adjustments of the lighting unit 7 and the lamp unit 47 may be simultaneously performed.

In the above-described vehicle headlamps 1A to 1F according to the second to seventh examples similarly to the vehicle headlamp 1 according to the first example, the coupling points of the lighting unit 7 to other members are two points of the first and second coupling portions 13 and 14 which are positioned in the substantially vertical direction, and the lighting unit 7 is rotated about the axis connecting the first and second coupling portions 13 and 14 with each other in the horizontal direction and is tilted about the first coupling portion 13 in the substantially vertical direction during the optical axis adjustment (during the aiming adjustment).

Consequently, also in each of the vehicle headlamps 1A to 1F, the vehicle headlamp is resistant to influence caused by vibration occurring during the running of a vehicle and the like, and it is possible to achieve an improvement in resistance to vibration.

In addition, also in each of the vehicle lamps 1A to 1F, similarly to the vehicle headlamp 1, since a structure is adopted in which the lighting unit 7 is supported on the frame 16, 16A, or 16E fixed in the lamp chamber 5, the total load of the lighting unit 7 and the frame 16, 16A, or 16E is not put on the rotation operation portion 31 or 31D and the drive member 35 so that it is possible to achieve an improvement in resistance to vibration.

Further, also in each of the vehicle headlamps 1A to 1F, since the center of gravity G of the lighting unit 7 is positioned between the first and second coupling portions 13 and 14, the first and second coupling portions 13 and 14 as the coupling points of the lighting unit 7 to other members are positioned in the vertical plane including the center of gravity G of the lighting unit 7 so that it is possible to achieve a further improvement in resistance to vibration.

The shape and structure of each portion shown in the above-described best mode for carrying out the invention are only one example of the implementation performed when the present invention is carried out, and the technical scope of the present invention should not be construed in a limited manner thereby.

## Claims

1. A vehicle headlamp comprising:
a lamp housing (2), an interior of which defines a lamp chamber (5);
a frame (16) fixed to the lamp housing (2) in the lamp chamber (5);
a lighting unit (7) comprising a first coupling portion (13) and a second coupling portion (14), the lighting unit being supported on the frame (16) so as to be rotatable about the first coupling portion (13) in any direction;
a rotor (22) supported on the frame (16) so as to be rotatable in a horizontal direction, the rotor rotating the lighting unit (7) about the first coupling portion (13) in the horizontal direction by rotating in the horizontal direction;
a slider (26) supported so as to be movable in a back-and-forth direction, the being coupled to the second coupling portion (14) of the lighting unit (7), and tilting the lighting unit (7) about the first coupling portion (13) in a substantially vertical direction by being moved in the back-and-forth direction;
a rotation operation portion (31) adapted to be rotated relative to the frame (16) and rotating the rotor (22) in the horizontal direction by being rotated;
a drive operation portion (32) adapted to be rotated relative to the frame (16) and moving the slider (26) in the back-and-forth direction by being rotated;
a first transmission member (31b) which transmits a rotation force in the horizontal direction to the rotor (22); and
a second transmission member (40) which transmits a movement force in the back-and-forth direction to the slider (26),
wherein the first coupling portion (13) and the second coupling portion (14) of the lighting unit (7) are positioned so as to be substantially vertically spaced apart,
**characterised in that**:
the slider (26) is supported on the rotor (22); and
at least a part of the rotation operation portion (31) and at least a part of the drive operation portion (32) are coaxially coupled to each other so as to be rotatable relative to each other,
the rotation force is transmitted to the rotor (22) via the first transmission member (31b) when the rotation operation portion (31) is rotated, and
the movement force is transmitted to the slider (26) via the second transmission member (40) when the drive operation portion (32) is rotated.

2. The vehicle headlamp of claim 1, wherein a center of gravity of the lighting unit (7) is positioned between the first coupling portion (13) and the second coupling portion (14).

3. The vehicle headlamp of claim 1 or 2, wherein the rotation operation portion (31) and the drive operation portion (32) are both disposed on one of the left and right sides of the lighting unit (7) relative to the second coupling portion (14).

4. The vehicle headlamp of claim 1, 2, or 3, further comprising:
a lamp unit (47) adapted to be rotated in the horizontal direction and tilted in the substantially vertical direction;
a rotation unit (46) rotated in the horizontal direction in synchronization with the rotor (22), the rotation unit rotating the lamp unit (47) in the horizontal direction in synchronization with the lighting unit (7) when the rotation operation portion (31) is rotated, and
a slide unit (44) moved in the back-and-forth direction in synchronization with the slider (26) and tilting the lamp unit (47) in the substantially vertical direction in synchronization with the lighting unit (7) when the drive operation portion (32) is rotated.

## Patentansprüche

1. Fahrzeug-Scheinwerfer, der umfasst:
ein Lampengehäuse (2), dessen Innenraum eine Lampenkammer (5) bildet;
einen Rahmen (16), der an dem Lampengehäuse (2) In der Lampenkammer (5) befestigt ist;
eine Beleuchtungseinheit (7), die einen ersten Kopplungsabschnitt (13) und einen zweiten Kopplungsabschnitt (14) umfasst, wobei die Beleuchtungseinheit von dem Rahmen (16) so getragen wird, dass sie in jeder beliebigen Richtung um den ersten Kopplungsabschnitt (13) herum gedreht werden kann;
einen Rotor (22), der von dem Rahmen (16) so getragen wird, dass er in einer horizontalen Richtung gedreht werden kann, wobei der Rotor durch Drehen in der horizontalen Richtung die Beleuchtungseinheit (7) in der horizontalen Richtung um den ersten Kopplungsabschnitt (13) herum dreht;
ein Gleitelement (26), das so getragen wird, dass es in einer Längsrichtung bewegt werden kann, wobei das Gleitelement mit dem zweiten Kopplungsabschnitt (14) der Beleuchtungseinheit gekoppelt ist und, indem es in der Längsrichtung bewegt wird, die Beleuchtungseinheit (7) in einer im Wesentlichen vertikalen Richtung um den ersten Kopplungsabschnitt (13) herum neigt;
einen Dreh-Betätigungsabschnitt (31), der so eingerichtet ist, dass er relativ zu dem Rahmen (16) gedreht wird und, indem er gedreht wird, den Rotor (22) in der horizontalen Richtung dreht;
einen Antriebs-Betätigungsabschnitt (32), der so eingerichtet ist, dass er relativ zu dem Rahmen (16) gedreht wird, und, indem er gedreht wird, das Gleitelement (26) in der Längsrichtung bewegt;
ein erstes Übertragungselement (31 b), das eine Drehkraft in der horizontalen Richtung auf den Rotor (22) überträgt; und
ein zweites Übertragungselement (40), das eine Bewegungskraft in der Längsrichtung auf das Gleitelement (26) überträgt,
wobei der erste Kopplungsabschnitt (13) und der zweite Kopplungsabschnitt (14) der Beleuchtungseinheit (7) so positioniert sind, dass sie im Wesentlichen vertikal beabstandet sind,
**dadurch gekennzeichnet, dass**:
das Gleitelement (26) von dem Rotor (22) getragen wird; und
wenigstens ein Teil des Dreh-Betätigungsabschnitts (31) und wenigstens ein Teil des Antriebs-Betätigungsabschnitts (32) koaxial miteinander gekoppelt sind, so dass sie relativ zueinander gedreht werden können,
die Drehkraft über das erste Übertragungselement (31b) auf den Rotor (22) übertragen wird, wenn der Dreh-Betätigungsabschnitt (31) gedreht wird, und
die Bewegungskraft über das zweite Übertragungselement (40) auf das Gleitelement (26) übertragen wird, wenn der Antriebs-Betätigungsabschnitt (32) gedreht wird.

2. Fahrzeug-Scheinwerfer nach Anspruch 1, wobei ein Schwerpunkt der Beleuchtungseinheit (7) zwischen dem ersten Kopplungsabschnitt (13) und dem zweiten Kopplungsabschnitt (14) positioniert ist.

3. Fahrzeug-Scheinwerfer nach Anspruch 1 oder 2, wobei der Dreh-Betätigungsabschnitt (31) und der Antriebs-Betätigungsabschnitt (32) beide an der linken oder der rechten Seite der Beleuchtungseinheit (7) relativ zu dem zweiten Kopplungsabschnitt (14) angeordnet sind.

4. Fahrzeug-Scheinwerfer nach Anspruch 1, 2 oder 3, der des Weiteren umfasst:
eine Lampeneinheit (47), die so eingerichtet ist, dass sie in der horizontalen Richtung gedreht und in der im Wesentlichen vertikalen Richtung geneigt wird;
eine Dreheinheit (46), die synchron zu dem Rotor (22) in der horizontalen Richtung gedreht wird, wobei die Dreheinheit die Lampeneinheit (47) synchron zu der Beleuchtungseinheit (7) in der horizontalen Richtung dreht, wenn der Dreh-Betätigungsabschnitt (31) gedreht wird,
eine Gleiteinheit (44), die synchron zu dem Gleitelement (26) in der Längsrichtung bewegt wird und die Lampeneinheit (47) synchron zu der Beleuchtungseinheit (7) in der im Wesentlichen vertikalen Richtung neigt, wenn der Antriebs-Betätigungsabschnitt (32) gedreht wird.

## Revendications

1. Phare de véhicule comprenant :
un boîtier de lampe (2), dont un intérieur définit une chambre de lampe (5) ;
un cadre (16) fixé sur le boîtier de lampe (2) dans la chambre de lampe (5) ;
une unité d'éclairage (7) comprenant une première partie de couplage (13) et une seconde partie de couplage (14), l'unité d'éclairage étant supportée sur le cadre (16) de façon à pouvoir tourner autour de la première partie de couplage (13) dans toutes les directions ;
un rotor (22) supporté sur le cadre (16) de façon à pouvoir tourner dans une direction horizontale, le rotor faisant tourner l'unité d'éclairage (7) autour de la première partie de couplage (13) dans la direction horizontale en tournant dans la direction horizontale ;
un coulisseau (26) supporté de façon à être mobile dans une direction avant-arrière, le coulisseau (26) étant couplé à la seconde partie de couplage (14) de l'unité d'éclairage (7), et inclinant l'unité d'éclairage (7) autour de la première partie de couplage (13) dans une direction sensiblement verticale en étant déplacé dans la direction avant-arrière ;
un partie d'actionnement en rotation (31) adaptée pour être mise en rotation par rapport au cadre (16) et faisant tourner le rotor (22) dans la direction horizontale en étant mise en rotation ;
une partie d'actionnement en entraînement (32) adaptée pour être mise en rotation par rapport au cadre (16) et déplaçant le coulisseau (26) dans la direction avant-arrière en étant mise en rotation ;
un premier élément de transmission (31b) qui transmet une force de rotation dans la direction horizontale au rotor (22) ; et
un second élément de transmission (40) qui transmet une force motrice dans la direction avant-arrière au coulisseau (26),
dans lequel la première partie de couplage (13) et la seconde partie de couplage (14) de l'unité d'éclairage (7) sont positionnées de façon à être espacées sensiblement verticalement,
**caractérisé en ce que** :
le coulisseau (26) est supporté sur le rotor (22) ; et
au moins une partie de la partie d'actionnement en rotation (31) et au moins une partie de la partie d'actionnement en entraînement (32) sont coaxialement couplées ensemble de façon à pouvoir tourner l'une par rapport à l'autre,
la force de rotation est transmise au rotor (22) via le premier élément de transmission (31b) quand la partie d'actionnement en rotation (31) est mise en rotation, et
la force motrice est transmise au coulisseau (26) via le second élément de transmission (40) quand la partie d'actionnement en entraînement (32) est mise en rotation.

2. Phare de véhicule selon la revendication 1, dans lequel un centre de gravité de l'unité d'éclairage (7) est positionné entre la première partie de couplage (13) et la seconde partie de couplage (14).

3. Phare de véhicule selon la revendication 1 ou 2, dans lequel la partie d'actionnement en rotation (31) et la partie d'actionnement en entraînement (32) sont toutes les deux disposées sur l'un des côtés gauche et droit de l'unité d'éclairage (7) par rapport à la seconde partie de couplage (14).

4. Phare de véhicule selon la revendication 1, 2 ou 3, comprenant en outre :
une unité de lampe (47) adaptée pour être mise en rotation dans la direction horizontale et inclinée dans la direction sensiblement verticale ;
une unité de rotation (46) mise en rotation dans la direction horizontale en synchronisation avec le rotor (22), l'unité de rotation mettant en rotation l'unité de lampe (47) dans la direction horizontale en synchronisation avec l'unité d'éclairage (7) quand la partie d'actionnement en rotation (31) est mise en rotation, et
une unité de coulissement (44) déplacée dans la direction avant -arrière en synchronisation avec le coulisseau (26) et inclinant l'unité de lampe (47) dans la direction sensiblement verticale en synchronisation avec l'unité d'éclairage (7) quand la partie d'actionnement en entraînement (32) est mise en rotation.
